# EUROPEAN PATENT APPLICATION

(11) **EP 1 796 421 A1**
(43) Date of publication of application: **13.06.2007**
(21) Application number: 06722014.5
(22) Date of filing: 08.03.2006
(51) Int. Cl.: H04Q 7/38

(54) **A METHOD FOR RESTRICTING THE TERMINAL TO PREDETERMINED AREA OR OPERATOR**

(30) Priority: 09.03.2005 CN 200510033585
(71) Applicant: Huawei Technologies Co., Ltd., Longgang District, Shenzhen Guangdong 518129 (CN)
(72) Inventor: WANG, Zhengwei Huawei Administration Building, Shenzhen Guangdong 518129 (CN); LU, Fangyong Huawei Administration Building, Shenzhen Guangdong 518129 (CN); YANG, Maoying Huawei Administration Building, Shenzhen Guangdong 518129 (CN)
(74) Representative: Epping - Hermann - Fischer
(86) International application number: PCT/CN2006/000349
(87) International publication number: WO 2006/094459

(57) **Abstract**

The present invention relates to mobile communication, in particular, to a method for locking a terminal home, which may ensure that in a preferential activity of the network operator, a gift, discounted or rented terminal may be used when it is limited in a designated area or network, so that "sales across regions" in the prior art may be prevented. According to the embodiments of the invention, network operator information and home information related to a terminal are preset. After the terminal starts up, whether the terminal is within the preset network of the network operator is determined, and whether the current home is the preset home is determined. The terminal may only be used normally in the preset network of the network operator and in a specific area.

## Description

### Field of the Invention

The present invention relates to mobile communication, in particular, to access control technology of a mobile communication system.

### Background of the Invention

As mobile communication technology develops, terminals have achieved worldwide popularity as modem communication tools. In comparison with fixed-line telephones, terminals have mobility and make the work and life of users more convenient.

In order to identify a terminal, a unique IMEI (International Mobile Equipment Identity) corresponding to each terminal is stored in each terminal. At network side, whether a terminal is illegal and whether to render services for a terminal may be determined with equipment parameters such as IMEI, etc.. At network side, the identifying of a piece of mobile station equipment, such as a terminal, is performed in an EIR (Equipment Identity Register). Wherein, a database related to mobile station equipment parameters is stored in the EIR. The EIR performs identifying, monitoring and blocking functions on the mobile station equipment. Three kinds of lists are stored in the EIR: a white list, including all the mobile station equipment allocated to each country which may participate in operation; a black list, including all the disabled mobile station equipment; a grey list, including the defective mobile station equipment and the mobile station equipment of which the types have not been authenticated, as determined by network operators. Usually, the identifying of the equipment in the EIR may be performed via parameters such as an IMEI, etc.. When a terminal user initiates a call, an MSC (Mobile Switching Center) and a VLR (Visitor Location Register) request the IMEI from the terminal, and send it to the EIR. The EIR identifies the equipment by means of the received IMEI, and sends the result to the MSC/VLR, so that the MSC/VLR determines whether to permit the terminal to access a network.

Corresponding to an IMEI of a terminal, an IMSI (International Mobile Subscriber Identity) may be allocated for each terminal user. The IMSI is valid in the whole system and it is used to identify and authenticate the subscriber identity. In general, the IMSI is stored in the terminal. After Set-Card Separation, the IMSI is stored in the subscriber card of the terminal. For example, in a GSM (Global System for Mobile Communication), the IMSI is stored in an SIM (Subscriber Identification Module).

At present, as the popularizing of terminals and the saturating of market, it has become an urgent issue for network operators that how to develop new subscribers and how to keep these new subscribers. Many network operators often push out some activities such as providing discounted terminals or rented terminals so as to develop and keep new subscribers. For example, when a subscriber deposits a certain amount of call charge or subscribes to consume in a mobile network of a network operator for a certain time period and for a certain amount of money, the subscriber may obtain a gift terminal free of charge or at a discount. Or, after a subscriber signs a contract, the subscriber may rent a terminal for free, and after a certain time period or a certain amount of money is consumed, the subscriber will own this terminal. These preferential activities are attractive for consumers and may attain the object of developing and keeping new subscribers to a certain degree.

In existing mobile communication networks, an authentication for a subscriber who accesses a network is performed on a subscriber card of the subscriber, without need of an authentication for a terminal. As a result, a gift, discounted or rented terminal may also be used in networks of other network operators or other networks with the same mode. When a new subscriber gets a terminal, the new subscriber may sell it to a terminal hawker at a discount, and the terminal hawker resells it to an area without such a discounted activity and sells the deposited charge at a discount to an old subscriber. This is referred to as "sales across regions", which results in that the object of developing new subscribers of the network operator will not be attained, and because the discounted or gift terminals are customized from terminal manufacturers by the network operator, the subsidy cost of the terminals is relatively high and the network operator may even suffer a loss of terminal cost.

In practical applications, the following situation may arise in the above technical scheme. Because "sales across regions" arises along with the latest discounted activity of a network operator, the situation is not considered in the prior art, and no effective solutions are put forward to lock the use of a discounted terminal in a network or to ensure a discounted terminal to use a local subscriber card. There are no corresponding solutions for this situation in the prior art.

### Summary of the Invention

According to an embodiment of the present invention, a method is provided for locking a terminal home, which may ensure that a specific terminal home may be limited to a designated area or network, so that the "sales across regions" in the prior art may be prevented.

According to an embodiment of the present invention, there is provided a method for locking a terminal home (different from locking the use of a terminal in a designated area), including:
A. presetting home information related to a terminal;
B. obtaining current home information related to the terminal after the terminal starts up; and
C. determining whether the preset home information related to the terminal is consistent with the current home information related to the terminal; if it is, configuring the terminal to normally operate; otherwise, refusing to configure the terminal to normally operate.

The home information and/or the current home information include one or more of the followings: a card number of a subscriber card, an International Mobile Subscriber Identity, an Mobile Subscriber Directory Number, an Area code, a Matching Code Value or Segment Value of a subscriber card number, a Matching Code Value or Segment Value of an International Mobile Subscriber Identity, and a Matching Code Value or Segment Value of a Mobile Subscriber Directory Number.

When the Area Code is used as the home information, the following information is also set: an International Mobile Subscriber Identity corresponding to the Area Code, or a Matching Code Value or Segment Value of an International Mobile Subscriber Identity, or a Mobile Subscriber Directory Number, or a Matching Code Value or Segment Value of a Mobile Subscriber Directory Number.

In the step A, the home information is set in the terminal or in a piece of related storage equipment at network side.

The home information set at the network side is set according to a terminal identity.

The process of determining of the step C is performed by the terminal or the network side.

The method further includes: sending a result to the network side after the process of determining in the step C is performed by the terminal, or sending a result to the terminal after the process of determining in the step C is performed by the network side.

Information is transmitted between the terminal and network side via one of the following ways: Short Message, Unstructured Supplementary Service Data, and the Over-The-Air protocol.

The method according to an embodiment of the present invention further includes: setting network operator information in the terminal; in the step B, after the terminal starts up,further accordingly including: obtaining the current network operator information and comparing the current network operator information with the set network operator information, if they are consistent with each other, continuing the process; if they are not consistent with each other, refusing to configure the terminal to normally operate.

In the step C, if the terminal is not configured to normally operate, the terminal is unable to operate normally or the user of the terminal is prohibited from using network-related services.

The network-related services include one or more of the following services: calling, message sending and receiving, online games and setting subscription data.

In step C, the determining whether the obtained current home information is consistent with the preset home information further includes: determining whether the obtained current home information is the same as the preset home information, or whether the obtained current home information matches the preset home information.

The home information related to the terminal and/or the current home information related to the terminal are network operator information.

The network operator information includes a Public Land Mobile Network Identity PLMN and/or a Network operator Name.

It may be noted by comparison that the technical scheme according to the embodiments of the present invention differs from the prior art in that: the home information related to a terminal is preset. After the terminal starts up, whether the current home of the terminal is the preset home of the terminal is determined. The terminal may be used normally only if the conditions are met.

The technical scheme according to the embodiments of the invention may bring apparent beneficial effects. In other words, because the technical scheme according to the embodiments of the invention may limit a terminal home in a special area or a network, if a discounted terminal provided in a discounted activity of a network operator is resold and the current home of the terminal is changed, for example, to networks of other network operators or other areas, and does not match the preset home information related to the terminal, the terminal will not normally operate after starting up, so that "sales across regions" may be effectively avoided and the object of the network operator to develop and keep subscribers may be attained. Especially when the current market tends to saturate, the invention may help network operators to organize discounted activities securely so as to expand their business safely and orderly.

### Brief Description of the Drawings

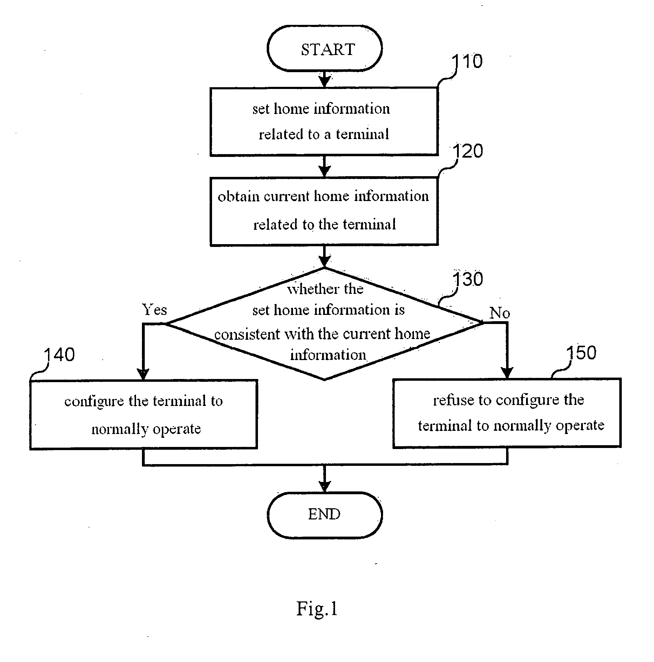

Fig. 1 is a flow chart of a method for locking a terminal home according to an embodiment of the present invention.

### Detailed Description of the Embodiments

In order to make the objects, the technical scheme and the advantages of the embodiments of the present invention more apparently, detailed description will now be given in conjunction with the drawings.

In general, the principle of the invention lies in that: home information related to a terminal is preset, which includes home area information and/or network operator information. When the current home information related to the terminal is consistent with the preset home information related to the terminal, the terminal may be used normally; otherwise, an abnormity will be processed, so that the terminal is unable to normally operate or use a network service. Because the technical scheme of the embodiment of the invention may limit the use of a terminal in a designated area or a network, if a terminal is resold to networks of other network operators or other areas, the information related to new home area will not be consistent with its preset home information related to the terminal, or the current network operator information will not be consistent with the preset network operator information, therefore, the terminal is unable to be used normally, and "sales across regions" will be prevented effectively.

Notably, the present invention is different from locking a terminal for use in a designated area. For example, according to an embodiment of the present invention, a terminal home may be locked in Shanghai and the communication number of the terminal or the International Mobile Subscriber Identity (IMSI) of the terminal user may only belong to Shanghai, rather than Beijing, but the terminal may be used in Beijing. For example, the terminal may be roamed to Beijing.

The present invention will now be described in detail in conjunction with the accompanying drawing and preferred embodiments.

Fig.1 is a flow chart of a method for locking a terminal home according to an embodiment of the present invention.

In Step 110, set home information related to a terminal. The home information related to the terminal may be set at network side or in the terminal. When the home information related to the terminal is set at the network side, the correspondence relation may be set in a piece of related storage equipment at the network side, and the related storage equipment may be an EIR or an HLR (Home Location Register). Notably, when the home information related to the terminal is set at the network side, the home information related to the terminal is set according to a terminal identity. Therefore, the network side may obtain the home information related to the terminal according to the terminal identity. The terminal identity may be an IMEI number or an ESN (Electronic Serial Number) of a terminal.

The home information related to a terminal may be a subscriber card number, such as an Electronic Serial Number (ESN) of a card, a Segment Value of a card number, an IMSI, a Matching Code Value of an IMSI (such as a Segment Value of an IMSI), a Mobile Subscriber Directory Number (MSDN), or a Segment Value or Area Code information of an MSDN. If the home information related to the terminal is the Area Code information, for example, the Area Code of Beijing is 010, the Area Code of Shenzhen is 0755, then an IMSI corresponding to the area code, or a Matching Code Value or Segment Value of an IMSI, or an MSDN, or a Matching Code Value or Segment Value of an MSDN may also be set.

Those skilled in the art may understand that a terminal home configured according to an embodiment of the present invention may be used to indicate a subscriber card or a range of subscriber cards that may be used by the terminal, for example, subscriber cards of an area, or subscriber cards of certain areas.

In Step 120, obtain current home information related to the terminal. This step may be performed in a terminal or at network side. The current home information related to the terminal is home information of a current subscriber card in the terminal. In general, the home information of a subscriber card may be area information of a piece of equipment to which the subscriber card belongs. In practice, the current home information related to the terminal may be a subscriber card number, such as an Electronic Serial Number (ESN) of a subscriber card, a Segment Value of a card number, an IMSI, a Matching Code Value of an IMSI (such as Segment Value of an IMSI), an MSDN, a Segment Value of an MSDN or Area Code information. If the home information related to the terminal is Area Code information, for example, the Area Code of Beijing is 010, the Area Code of Shenzhen is 0755, then an IMSI corresponding to the Area Code, or a Matching Code Value or a Segment Value of an IMSI, or an MSDN, or a Matching Code Value or a Segment Value of an MSDN should also be set.

For cases in which the current home information related to the terminal is obtained by the terminal, if the set home information related to the terminal is a subscriber card number, for example, an Electronic Serial Number of a subscriber card, the terminal reads the Electronic Serial Number of the current subscriber card and takes it as the current home information related to the terminal. If the home information related to the terminal is an IMSI, the terminal reads the IMSI information of the current subscriber card and takes it as the current home information related to the terminal. If the home information related to the terminal is a Matching Code Value of an IMSI, the terminal reads the IMSI information of the current subscriber card, obtains the corresponding Matching Code Value from the IMSI and takes it as the current home information related to the terminal. For example, the Matching Code Value is 138239, which is used to match the first six characters of the IMSI string, thus, when obtaining the corresponding current home information related to the terminal, a substring of the first six characters is extracted from an IMSI of the current subscriber card and taken as the corresponding current home information related to the terminal. In practice, an IMSI of the current subscriber card may be taken as the current home information related to the terminal. If the home information related to the terminal is an MSDN, the terminal obtains the MSDN information of the subscriber from a network, and takes the MSDN as the current home information related to the terminal. If the home information related to the terminal is a Segment Value of an MSDN, the terminal obtains the MSDN information of the subscriber from a network, and obtains the corresponding Segment Value from the MSDN and takes it as the current home information related to the terminal. In practice, an MSDN of an subscriber may be taken as the current home information related to the terminal. If the home information related to the terminal is the Area Code information, correspondingly, the related information corresponding to the Area Code, such as an IMSI, a Matching Code Value or Segment Value of an IMSI, or an MSDN, or a Matching Code Value or Segment Value of an MSDN should also be set. As a result, the corresponding Area Code information may be obtained based on the current IMSI or MSDN and taken as the current home information related to the terminal. In practice, the IMSI of the current subscriber card, or the Matching Code Value or Segment Value of the IMSI, or the MSDN of the current subscriber, or the Matching Code Value or Segment Value of the MSDN may be taken as the current home information related to the terminal. In general, the setting of the related information corresponding to the Area Code is performed in a piece of related equipment at the network side. The related equipment may be an HLR or an EIR.

For cases in which the current home information related to the terminal is obtained at the network side, if the home information related to the terminal is a subscriber card number, for example, an Electronic Serial Number of a subscriber card, the terminal reads the Electronic Serial Number of the current subscriber card and sends it to a network, and the network takes it as the current home information related to the terminal. If the home information related to the terminal is an IMSI, the terminal reads the IMSI information of the current subscriber card and sends it to a network, and the network takes it as the current home information related to the terminal. In practice, the IMSI is contained in authentication information, therefore, no signaling needs to be added when sending the IMSI. If the set home information related to the terminal is a Matching Code Value of an IMSI, the network side obtains the corresponding Matching Code Value from the IMSI of the current subscriber card and takes it as the current home information related to the terminal. In practice, the IMSI of the current subscriber card may also be taken as the current home information related to the terminal. If the home information related to the terminal is an MSDN, the network side takes the current MSDN as the current home information related to the terminal. If the home information related to the terminal is a Segment Value of an MSDN, the network side obtains the corresponding Segment Value from the MSDN and takes it as the current home information related to the terminal. In practice, the MSDN of the current subscriber may also be taken as the current home information related to the terminal. If the home information related to the terminal is Area Code information, correspondingly, the related information corresponding to the Area Code, such as, a IMSI, or a Matching Code Value or Segment Value of an IMSI, or an MSDN, or a Matching Code Value or Segment Value of an MSDN should also be set, thereby, the network side may obtain the corresponding Area Code information based on the current IMSI or MSDN and take it as the current home information related to the terminal. In practice, the IMSI of the current subscriber card, or the Matching Code Value or Segment Value of the IMSI, or the MSDN of the current subscriber, or the Matching Code Value or Segment Value of the MSDN may also be taken as the current home information related to the terminal. In general, the related information corresponding to the Area Code is set in the related equipment at the network side.

Wherein, the corresponding information may be transmitted between the terminal and the network side via Short Message, or USSD (Unstructured Supplementary Service Data), or the OTA (Over-The-Air) protocol.

In step 130, compare and determine whether the home information related to the terminal is consistent with the current home information related to the terminal, if it is, going to Step 140; otherwise, going to Step 150. The comparing may be performed in the terminal, or at the network side.

Notably, the home information related to the terminal and/or the current home information related to the terminal includes at least one of: a subscriber card number, an IMSI, an MSDN, an Area Code, a Matching Code Value or Segment Value of a subscriber card number, a Matching Code Value or Segment Value of an IMSI, a Matching Code Value or Segment Value of an MSDN.

For cases in which the home information related to the terminal is a subscriber card number, an IMSI or an MSDN respectively, the current home information related to the terminal may correspond to the current subscriber card number, the IMSI of the current subscriber card, or the MSDN of the current subscriber. As a result, determining whether the home information related to the terminal is consistent with the current home information related to the terminal may be performed by determining whether the home information related to the terminal is the same as the current home information related to the terminal.

For cases in which the home information related to the terminal is an Area Code, the current home information related to the terminal may be an Area Code, or it may be an IMSI or an MSDN. When the current home information related to the terminal is an Area Code, determining whether the home information related to the terminal is consistent with the current home information related to the terminal may be performed by determining whether the home information related to the terminal is the same as the current home information related to the terminal. When the current home information related to the terminal is the IMSI of the current subscriber card or the MSDN of the current subscriber, determining whether the home information related to the terminal is consistent with the current home information related to the terminal may be performed by determining whether the current home information related to the terminal matches the set Matching Code Value of the IMSI or the IMSI corresponding to the Area Code, or the MSDN, or the Matching Code Value of the MSDN. For example, if the Matching Code Value is a first number segment of 139, a number with an MSDN of 13923812345 will match the Code Value 139.

For cases in which the home information related to the terminal is a Matching Code Value or Segment Value of a subscriber card number, a Matching Code Value or Segment Value of an IMSI, or a Matching Code Value or Segment Value of an MSDN respectively, the current home information related to the terminal may correspond to the Matching Code Value or Segment Value of the current subscriber card number, the Matching Code Value or Segment Value of the IMSI of the current subscriber card, the Matching Code Value or Segment Value of the MSDN of the current subscriber. In practice, it may also be the current subscriber card number, the IMSI of the current subscriber card, or the MSDN of the current subscriber. When the current home information related to the terminal corresponds to the Matching Code Value or Segment Value of the current subscriber card number, the Matching Code Value or Segment Value of the IMSI of the current subscriber card, or the Matching Code Value or Segment Value of the MSDN of the current subscriber, determining whether the home information related to the terminal is consistent with the current home information related to the terminal may be performed by determining whether the home information related to the terminal is the same as the current home information related to the terminal. When the current home information related to the terminal corresponds to the current subscriber card number, the IMSI of the current subscriber card, or the MSDN of the current subscriber, determining whether the home information related to the terminal is consistent with the current home information related to the terminal may be performed by determining whether the current home information related to the terminal matches the set home information related to the terminal.

Notably, in Step 120 and Step 130, the information may be transmitted between the terminal and the network side. For example, in order to obtain the home information related to the terminal, a terminal identity, such as an IMEI, may be transmitted between the terminal and the network side. If in Step 130, the comparing and the obtaining of the home information related to the terminal or the storing of the current home information related to the terminal is performed in the terminal and at the network side respectively, then the corresponding information may be transmitted between the terminal and the network side. Wherein, the information may be transmitted between the terminal and the network side by means of various technologies, such as Short Message, USSD, and OTA, etc..

If in Step 130, it is determined that the home information related to the terminal is consistent with the current home information related to the terminal, then in Step 140, configure the terminal to normally operate. At this point, the current home of the terminal may be accepted, and the subscriber card currently used by the terminal is permitted. Therefore, the terminal is configured to normally operate and the subscriber may use various services provided by the network.

Notably, the Step 140 may be performed by the terminal or the network. When Step 140 is performed by the terminal, it is the terminal itself that makes it normally operate. In this case, the Step 130 is usually performed at the terminal side. When the Step 130 is performed at the network side, the network side will send the comparison result to the terminal. When the Step 140 is performed by the network side, it is the network that permits the terminal to use related services provided by the network. In this case, the Step 130 is usually performed at the network side. When the Step 130 is performed at the terminal side, the terminal will send the comparison result to the network.

If in Step 130, it is determined that the home information related to the terminal is not consistent with the current home information related to the terminal, then in Step 150, refuse to configure the terminal to normally operate. At this point, the current home of the terminal will not be accepted, and the current subscriber card of the terminal is not permitted. Thus the terminal is not configured to normally operate. Wherein, refusing to configure the terminal to normally operate means that the terminal is unable to normally operate, or the user of the terminal is prohibited from using network-related services. Notably, the network-related services may be subscribed services of the current subscriber card of the terminal, such as, calling, sending Short Message, and setting Call Forwarding, etc..

Notably, the Step 150 may be performed by the terminal or the network. When the Step 150 is performed by the terminal, it is the terminal itself that makes it normally operate. In this case, the Step 130 is usually performed at the terminal side. When the Step 130 is performed at the network side, the network side will send the comparison result to the terminal. When the Step 150 is performed by the network side, it is the network that prohibits the terminal from using the related services provided by the network. In this case, the Step 130 is usually performed at the network side. When the Step 130 is performed at the terminal side, the terminal will send the comparison result to the network.

For cases in which the set home information related to the terminal is an Area Code, an IMSI corresponding to the Area Code, or a Matching Code Value or Segment Value of an IMSI, or an MSDN, or a Matching Code Value or Segment Value of an MSDN may be obtained based on the Area Code. Therefore, by means of determining whether the IMSI of the current subscriber card of the terminal matches the IMSI or the Matching Code of the IMSI obtained based on the Area Code, or determining whether the MSDN of the current subscriber matches the MSDN or the Matching Code of the MSDN obtained based on the Area Code, it may be determined whether the home information related to the terminal is consistent with the current home information related to the terminal, and it may be determined whether the terminal is legal or not. Such a case in which the home information related to the terminal is set as the Area Code is a case in which the home information related to the terminal is set as the IMSI, or the Matching Code Value or Segment Value of the IMSI, or the MSDN, or the Matching Code Value or Segment Value of the MSDN.

The invention will now be further described according to other embodiments.

In the first preferred embodiment of the invention, the home information related to the terminal is set in the terminal, and comparing the home information related to the terminal with the current home information related to the terminal is performed in the terminal. After the terminal starts up, the current home information related to the terminal is obtained, and it is compared with the home information related to the terminal stored in the terminal. If they are consistent with each other, the terminal will normally operate; otherwise, the terminal will not normally operate and it will be disabled or prohibited from using a network-related service. Preferably, the home information related to the terminal is an IMSI or a Segment Value of the IMSI.

In the second preferred embodiment of the invention, home information related to a terminal is set in a terminal, and comparing the home information related to the terminal with the current home information related to the terminal is performed at the network side. After the terminal starts up, it sends the home information related to the terminal to a piece of equipment at the network side. The equipment at the network side determines whether the set home information related to the terminal is consistent with the current home information related to the terminal. If they are consistent with each other, the terminal will be permitted to use a network-related service; otherwise, the terminal will be prohibited from using a network-related service.

In the third preferred embodiment of the invention, home information related to a terminal is set in a piece of equipment at network side, and comparing the home information related to the terminal with the current home information related to the terminal is performed on a terminal. After the terminal starts up, the current home information related to the terminal is obtained, and the equipment at the network side sends the home information related to the terminal to the terminal according to an IMEI of the terminal. The terminal determines whether the set home information related to the terminal is consistent with the current home information. If they are consistent with each other, the terminal will be permitted to use a network-related service; otherwise, the terminal will be prohibited from using a network-related service.

In the fourth preferred embodiment of the invention, home information related to a terminal is set in a piece of equipment at network side, and comparing the home information related to the terminal with the current home information related to the terminal is performed at the network side. After the terminal starts up, the terminal sends its IMEI to an MSC, and the MSC sends the IMEI to an EIR. At the same time, the network side obtains the current home information related to the terminal according to the IMSI. Then, the EIR determines whether the set home information related to the terminal is consistent with the current home information related to the terminal. If they are consistent with each other, the EIR returns the terminal legal information to the MSC and the MSC permits the terminal to normally use the network service; otherwise, the EIR returns the terminal illegal information to the MSC, and the MSC prohibits the terminal from normally using the network service. More specifically, the home information related to the terminal is set in the EIR corresponding to the IMEI, and the EIR will obtain the set home information related to the terminal according to the IMEI of the terminal.

In the third and the fourth preferred embodiments of the invention, the home information related to the terminal is set at the network side according to an identity of the terminal, such as an IMEI. The home information related to the terminal is obtained at the network side according to the IMEI of the terminal. The current home information related to the terminal is obtained according to the IMSI of the current subscriber card of the terminal. At the network side, the home information related to the terminal may be set in the EIR or the HLR.

In the above embodiments, the corresponding EIR equipment may also be replaced with a terminal equipment server. In other words, it is not limited to EIR equipment.

In the fifth preferred embodiment of the invention, network operator information is also preset in a terminal. Before determining whether the preset home information related to a terminal is consistent with the current home information related to the terminal, the terminal obtains the current network operator information and determines whether it is consistent with the network operator information preset in the terminal. If they are consistent with each other, then go to the next step; otherwise, the terminal will not normally operate. Thus, a discounted terminal may be effectively disabled in networks of other network operators.

Apparently, as in the foregoing embodiments, the terminal may obtain the current network operator information from the subscriber card (for example, an SIM card or a USIM card), and the network operator information may be a PLMN (Public Land Mobile Network) Identity. For example, the network operator information such as a PLMN may be obtained via the IMSI in the subscriber card. Similarly, it may be understood by those skilled in the art that the terminal may also obtain corresponding PLMN information from the subscriber card in other ways. The terminal may also obtain current network operator information from the network. For example, the terminal may obtain the PLMN of the network from a broadcast signal of the network. In practice, the terminal may also obtain the current network operator information from the network after it accesses the network. Apparently, the network operator information may also be a Network operator Name, etc..

Notably, in the fifth preferred embodiment of the invention, the network operator information and the home information related to the terminal are determined successively. But those skilled the art may understand that the network operator information may be preset only and the preset network operator information may be compared with the current network operator information. In other words, at this point, the home information related to the terminal is the network operator information.

In the sixth preferred embodiment of the invention, an area in an FLASH of a wireless terminal is reserved in advance for storing a list of allowed network operators (Allowed_PLMN_List) as the home information related to the terminal. In the list, the IDs of one or more PLMNs may be stored in a certain format. Next, the terminal obtains the network operator information from a subscriber card (such as an SIM card or a USIM card) as the current home information related to the terminal. For example, a corresponding file EFHPLMN contained in a subscriber card is read, and the HPLMN (Home Public Land Mobile Network) information in the subscriber card is obtained. Then, the HPLMN is compared with the preset list of supported network operators. If they match successfully, the subscriber card is legal for the terminal and the subscriber card is allowed to be used normally in the terminal; otherwise, the subscriber card will be illegal and the terminal will not normally operate, so that the terminal is unable to perform functions such as calling, sending Short Message and dial-up accessing. In practice, for cases in which the subscriber card is illegal, the terminal may support urgent calls. Thus, a discounted terminal may be effectively disabled in networks of other network operators.

In practice, the home information related to the terminal such as a network operator list may be protected by encryption. For example, an IMEI of a terminal may be used as a seed to generate a password, and the password may be used to encrypt the home information related to the terminal, which will not be described in detail here.

While the present invention has been illustrated and described with reference to some preferred embodiments, those skilled in the art may recognize that various variations and modifications in form and details may be made without departing from the spirit and scope of the present invention as defined by the accompanying claims.

## Claims

1. A method for locking a terminal home, comprising:
presetting home information related to a terminal;
obtaining current home information related to the terminal after the terminal starts up; and,
determining whether the obtained current home information is consistent with the preset home information; if it is, configuring the terminal to normally operate;
otherwise, refusing to configure the terminal to normally operate.

2. The method of claim 1, wherein the home information or the current home information comprises one or more of the followings: a card number of a subscriber card, an International Mobile Subscriber Identity, an Mobile Subscriber Directory Number, an Area code, a Matching Code Value or Segment Value of a subscriber card number, a Matching Code Value or Segment Value of an International Mobile Subscriber Identity, and a Matching Code Value or Segment Value of a Mobile Subscriber Directory Number.

3. The method of claim 2, wherein when the Area Code is used as the home information, the following information is also set: an International Mobile Subscriber Identity corresponding to the Area Code, or a Matching Code Value or Segment Value of an International Mobile Subscriber Identity, or a Mobile Subscriber Directory Number, or a Matching Code Value or Segment Value of a Mobile Subscriber Directory Number.

4. The method of claim 1, wherein the home information is preset in the terminal or in a piece of related storage equipment at network side.

5. The method of claim 4, wherein the home information preset at the network side is set according to a terminal identity.

6. The method of claim 1, wherein the process of determining is performed by the terminal or the network side.

7. The method of claim 6, after the terminal or the network side performs the determining process in the Step C, the method further comprising: sending a result to the network side after the process of determining is performed by the terminal, or sending a result to the terminal after the process of determining is performed by the network side.

8. The method of claim 7, wherein information is transmitted between the terminal and network side via one of the following ways: Short Message, Unstructured Supplementary Service Data, and the Over-The-Air protocol.

9. The method of any one of claims 2 to 8, further comprising: setting network operator information in the terminal; in Step B, after the terminal starts up, further accordingly comprising obtaining the current network operator information and comparing the current network operator information with the set network operator information, if they are consistent with each other, continuing the process; if they are not consistent with each other, refusing to configure the terminal to normally operate.

10. The method of claim 1, wherein in Step C, the refusing to configure the terminal to normally operate further comprises: prohibiting the user of the terminal from using subscribed network-related services.

11. The method of claim 10, wherein the network-related services comprise one or more of the following services: calling, message sending and receiving, online games and setting subscription data.

12. The method of claim 1, wherein in Step C, the determining whether the obtained current home information is consistent with the preset home information further comprises determining whether the obtained current home information is the same as the preset home information, or whether the obtained current home information matches the preset home information.

13. The method of claim 1, wherein the preset home information and/or the current home information are network operator information.

14. The method of claim 13, wherein the network operator information comprises a Public Land Mobile Network Identity PLMN and/or a network operator Name.

15. The method of claim 13, wherein in Step B, the obtaining current home information further comprises obtaining the network operator information from a subscriber card and/or a network.

16. The method of claim 13, wherein the network operator information is a Public Land Mobile Network Identity PLMN, in Step B, the obtaining the network operator information from a subscriber card further being obtaining corresponding Home Public Land Mobile Network HPLMN information from the subscriber card.
